(19) **Europäisches Patentamt**
**European Patent Office**
**Office européen des brevets**

(11) **EP 4 632 676 A1**

(12) **EUROPEAN PATENT APPLICATION**

(43) Date of publication:
**15.10.2025 Bulletin 2025/42**

(21) Application number: **24169486.8**

(22) Date of filing: **10.04.2024**

(51) International Patent Classification (IPC):
*G06T 7/73* (2017.01)

(52) Cooperative Patent Classification (CPC):
**G06T 7/75;** G06T 2207/20084; G06T 2207/30244

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
• **TOYOTA JIDOSHA KABUSHIKI KAISHA**
**Toyota-shi, Aichi-ken, 471-8571 (JP)**
• **The Chancellor, Masters and Scholars of the
University of Cambridge
Cambridge CB2 1TN (GB)**

(72) Inventors:
• **OLMEDA REINO, Daniel**
**1140 Brussels (BE)**
• **XUE, Fei**
**Cambridge, CB2 1TN (GB)**
• **BUDVYTIS, Ignas**
**Cambridge, CB2 1TN (GB)**
• **CIPOLLA, Roberto**
**Cambridge, CB2 1TN (GB)**

(74) Representative: **Cabinet Beau de Loménie
103, rue de Grenelle
75340 Paris Cedex 07 (FR)**

Remarks:
Amended claims in accordance with Rule 137(2)
EPC.

(54) **METHODS FOR VISUAL RELOCALIZATION TASKS**

(57)     A computer-implemented method for visual re-localization task is provided. The method comprises: (S10) generating an explicit 3D representation of a scene based on reference images of the scene taken from reference poses, each reference image comprising a global descriptor and valid keypoints having corresponding elements in the explicit 3D representation; (S20) learning an implicit 3D representation of the scene based on a neural radiance field model; (S30) determining candidate images matching the query image by comparing global descriptors of the reference images to a global descriptor of the query image; (S40) rendering a plurality of patches of the candidate images using the implicit 3D representation, the patches reflecting zones around the valid keypoints of the explicit 3D representation viewed from poses of candidate images; and (S50) determining the pose of the query image by matching local descriptors extracted from the rendered patches to local keypoints of the query image.

S10 — Generating an explicit 3D representation of a scene based on an ensemble of reference images of the scene taken from a plurality of reference poses, each reference image having a global descriptor and a plurality of valid keypoints having corresponding elements in the explicit 3D representation

S20 — Learning an implicit 3D representation of the scene based on a neural radiance field model

S30 — Determining, among the reference images, candidate images matching the query image by comparing the global descriptors extracted from the reference images to a global descriptor extracted from the query image

S40 — Rendering a plurality of patches of the candidate images using the implicit 3D representation of the scene, the sparse patches reflecting zones around the valid keypoints

S50 — Determining the pose of the query image by matching local descriptors extracted from the rendered patches to local keypoints of the query image

**FIG.1**

**Description**

BACKGROUND OF THE INVENTION

1. Field of the Invention

The invention relates to visual localization. In particular, the invention relates to methods for visual relocalization tasks.

2. Description of Related Art

Visual relocalization tasks are important in many applications such as autonomous driving, robotics, and virtual or augmented reality. Such tasks consist in predicting the pose of a sensor in a known environment from an input image captured with such sensor.

Methods have been proposed to tackle visual relocalization tasks, such as Absolute Pose Regression methods (APR, see for example [REF 1]), Scene Coordinate Regression methods (SCR, see for example [REF 2]), and Hierarchical Methods (HM, see [REF 3]). Although the methods of the prior art have become powerful tools for visual relocalization tasks they either lack efficiency due to the storage of a large number of text descriptors (like HM methods) or exhibit poor accuracy, especially in outdoor scenes (like APR and SCR methods).

Neural Radiance field (NeRF) is a framework in computer graphics and computer vision that aims to model complex 3D scenes by learning an implicit volumetric representation of the scene directly from images of such scene, see [REF 4]. Although NeRF have been proposed to improve SCR and APR methods for performing visual relocalization tasks, the performances remain limited, especially in outdoor scenes (see [REF 5] & [REF 6]). Notably, direct use of NeRF for relocalization tasks is generally inefficient as rendering all pixels of an image is slow. There is thus a need for a method solving problems of the prior art.

The following references disclose various methods relating to visual localization.

[REF 1] KENDALL, Alex, GRIMES, Matthew, et CIPOLLA, Roberto. Posenet: A convolutional network for real-time 6-dof camera relocalization. In : Proceedings of the IEEE international conference on computer vision. 2015. p. 2938-2946.

[REF 2] SHOTTON, Jamie, GLOCKER, Ben, ZACH, Christopher, et al. Scene coordinate regression forests for camera relocalization in RGB-D images. In : Proceedings of the IEEE conference on computer vision and pattern recognition. 2013. p. 2930-2937.

[REF 3] SARLIN, Paul-Edouard, CADENA, Cesar, SIEGWART, Roland, et al. From coarse to fine: Robust hierarchical localization at large scale. In : Proceedings of the IEEE/CVF Conference on Computer Vision and Pattern Recognition. 2019. p. 12716-12725.

[REF 4] MILDENHALL, Ben, SRINIVASAN, Pratul P., TANCIK, Matthew, et al. Nerf: Representing scenes as neural radiance fields for view synthesis. Communications of the ACM, 2021, vol. 65, no 1, p. 99-106.

[REF 5] LIU, Jianlin, NIE, Qiang, LIU, Yong, et al. NeRF-Loc: Visual Localization with Conditional Neural Radiance Field. arXiv preprint arXiv:2304.07979, 2023.

[REF 6] MOREAU, Arthur, PIASCO, Nathan, TSISHKOU, Dzmitry, et al. LENS: Localization enhanced by NeRF synthesis. In : 5th Annual Conference on Robot Learning. 2021.

[REF 7] PASZKE, Adam, GROSS, Sam, MASSA, Francisco, et al. Pytorch: An imperative style, high-performance deep learning library. Advances in neural information processing systems, 2019, vol. 32.

[REF 8] BARRON, Jonathan T., MILDENHALL, Ben, VERBIN, Dor, et al. Mip-nerf 360: Unbounded anti-aliased neural radiance fields. In : Proceedings of the IEEE/CVF Conference on Computer Vision and Pattern Recognition. 2022. p. 5470-5479.

[REF 9] KINGMA, Diederik P. et BA, Jimmy. Adam: A method for stochastic optimization. arXiv preprint arXiv: 1412.6980, 2014.

[REF 10] GLOCKER, Ben, IZADI, Shahram, SHOTTON, Jamie, et al. Real-time RGB-D camera relocalization. In : 2013 IEEE International Symposium on Mixed and Augmented Reality (ISMAR). IEEE, 2013. p. 173-179.

[REF 11] BRAHMBHATT, Samarth, GU, Jinwei, KIM, Kihwan, et al. Geometry-aware learning of maps for camera localization. In : Proceedings of the IEEE conference on computer vision and pattern recognition. 2018. p. 2616-2625.

[REF 12] XUE, Fei, WANG, Xin, YAN, Zike, et al. Local supports global: Deep camera relocalization with sequence enhancement. In : Proceedings of the IEEE/CVF International Conference on Computer Vision. 2019. p. 2841-2850.

[REF 13] WANG, Bing, CHEN, Changhao, LU, Chris Xiaoxuan, et al. Atloc: Attention guided camera localization. In : Proceedings of the AAAI Conference on Artificial Intelligence. 2020. p. 10393-10401.

[REF 14] XUE, Fei, WU, Xin, CAI, Shaojun, et al. Learning multi-view camera relocalization with graph neural networks. In : 2020 IEEE/CVF Conference on Computer Vision and Pattern Recognition (CVPR). IEEE, 2020. p. 11372-11381.

[REF 15] WU, Xin, ZHAO, Hao, LI, Shunkai, et al. Sc-wls: Towards interpretable feed-forward camera re-localization. In : European Conference on Computer Vision. Cham : Springer Nature Switzerland, 2022. p. 585-601.

[REF 16] SHAVIT, Yoli et KELLER, Yosi. Camera pose auto-encoders for improving pose regression. In : European Conference on Computer Vision. Cham : Springer Nature Switzerland, 2022. p. 140-157.

[REF 17] BRACHMANN, Eric, CAVALLARI, Tommaso, et PRISACARIU, Victor Adrian. Accelerated Coordinate Encoding: Learning to Relocalize in Minutes using RGB and Poses. In : Proceedings of the IEEE/CVF Conference on Computer Vision and Pattern Recognition. 2023. p. 5044-5053.

[REF 18] DETONE, Daniel, MALISIEWICZ, Tomasz, et RABINOVICH, Andrew. Superpoint: Self-supervised interest point detection and description. In : Proceedings of the IEEE conference on computer vision and pattern recognition workshops. 2018. p. 224-236.

[REF 19] SARLIN, Paul-Edouard, DETONE, Daniel, MALISIEWICZ, Tomasz, et al. Superglue: Learning feature matching with graph neural networks. In : Proceedings of the IEEE/CVF conference on computer vision and pattern recognition. 2020. p. 4938-4947.

[REF 20] XUE, Fei, BUDVYTIS, Ignas, et CIPOLLA, Roberto. SFD2: Semantic-guided Feature Detection and Description. In : Proceedings of the IEEE/CVF Conference on Computer Vision and Pattern Recognition. 2023. p. 5206-5216.

[REF 21] XUE, Fei, BUDVYTIS, Ignas, et CIPOLLA, Roberto. IMP: Iterative Matching and Pose Estimation with Adaptive Pooling. In : Proceedings of the IEEE/CVF Conference on Computer Vision and Pattern Recognition. 2023. p. 21317-21326.

[REF 22] SCHONBERGER, Johannes L. et FRAHM, Jan-Michael. Structure-from-motion revisited. In : Proceedings of the IEEE conference on computer vision and pattern recognition. 2016. p. 4104-4113.

[REF 23] ARANDJELOVIC, Relja, GRONAT, Petr, TORII, Akihiko, et al. NetVLAD: CNN architecture for weakly supervised place recognition. In : Proceedings of the IEEE conference on computer vision and pattern recognition. 2016. p. 5297-5307.

[REF 24] ARTHUR, David, VASSILVITSKII, Sergei, et al. k-means++: The advantages of careful seeding. In : Soda. 2007. p. 1027-1035.

[REF 25] BRACHMANN, Eric et ROTHER, Carsten. Visual camera re-localization from RGB and RGB-D images using DSAC. IEEE transactions on pattern analysis and machine intelligence, 2021, vol. 44, no 9, p. 5847-5865.

## SUMMARY OF THE INVENTION

According to aspects of the present disclosure, a computer-implemented method for relocalization tasks is provided. The method comprises steps of:

- generating an explicit 3D representation of a scene based on an ensemble of reference images of the scene taken from a plurality of reference poses, each reference image having a global descriptor and a plurality of valid keypoints that have corresponding elements in the explicit 3D representation;
- learning an implicit 3D representation of the scene based on a neural radiance field model;
- determining, among the reference images, candidate images matching the query image by comparing the global descriptors of the reference images to a global descriptor extracted from the query image;
- rendering a plurality of patches of the candidate images using the implicit 3D representation, the patches reflecting zones around the elements of the explicit 3D representation corresponding to the valid keypoints; and
- determining the pose of the query image by matching local descriptors extracted from the rendered patches to local keypoints of the query image.

In the present description, an explicit 3D representation of a scene is a 3D representation comprising elements that directly represent occupancy within a 3D space of the scene. Such explicit representation may be, for example, dense or sparse.

In the present description, an implicit 3D representation of a scene is a 3D representation that is not an explicit representation.

In the present description, the valid keypoints are 2D points of the reference images that have corresponding element (3D point) in the explicit 3D representation. Therefore, there is a 3D-2D projection relation between the keypoints and the corresponding elements. The valid keypoints may be defined by 2D coordinates in the reference images. Further, the corresponding elements may be defined by the 3D coordinates that lead, after projection to 2D, to such valid keypoints.

In the present description, the rendered patches are 2D projections of elements of the 3D representation that can be observed at camera poses corresponding to the reference images. The patches are reflecting zones around the elements of the explicit 3D representation when viewed from the reference poses of the candidate images.

With the present method, the combined use of an explicit 3D representation and an implicit 3D representation of a scene allows for achieving efficient and accurate visual relocalization tasks.

In particular, instead of rendering complete images, rendering is implemented only on sparse patches of the images, thereby avoiding time-consuming rendering process.

Further, it is possible to render patches of the images with only useful pixels, as opposed to relying on offline 2D descriptors, thereby allowing for discarding a large number of local descriptors of 2D keypoints so as to reduce the map size and release storage requirements.

According to embodiments, the reference images (and possibly keypoints other than the valid keypoints) are discarded after the step of generating an explicit 3D representation. In particular, the 2D coordinates of the valid keypoints may be discarded, and possibly recomputed from the corresponding 3D coordinates and camera parameters (such as intrinsic parameters and/or extrinsic parameters).

According to embodiments, the explicit 3D representation is one among: a 3D point cloud, a mesh, and a Gaussian splatting.

According to embodiments, the step of learning an implicit 3D representation of the scene based on a neural radiance field model comprises:

- dividing the scene into several sub-scenes and learning an implicit 3D representation of each sub-scene with an auxiliary neural radiance field model, thereby resulting in a plurality of learned implicit 3D representations based on a plurality of auxiliary neural radiance field models.

According to embodiments, the scene is divided into several sub-scenes through clustering of the poses of the reference images.

With this configuration, the present method leverages a clustering-based strategy in order to divide the scene into smaller ones adaptively and automatically, thereby enabling the application of neural radiance field models to large-scale outdoor scenes. In particular, this strategy allows for segmenting the scene in more balanced pieces.

According to embodiments, the query image comprises local descriptors, and the global descriptor of the query image is obtained by aggregating local descriptors into global descriptor. Such aggregation of local descriptors into a global descriptor can be implemented by using a machine-learning-based model. In particular, a neural-network-based global descriptor model can be used, such as a NetVLAD model (see [REF 23]).

According to embodiments, the local descriptors of the rendered patches are extracted from the rendered patches by using local feature extraction models.

According to embodiments, the step of rendering a plurality of patches of the candidate images using the implicit 3D representation, the patches reflecting zones around the elements of the explicit 3D representation that correspond to the valid keypoints (that are projected to the candidate images) comprises, for each candidate image:

- obtaining 3D coordinates of a valid keypoint in the explicit 3D representation;
- generating a plurality of rays around the 3D coordinates of the valid keypoint; and
- rendering a patch of the candidate image using the implicit 3D representation based on the plurality of rays and on the reference pose.

Advantageously, as the 3D coordinates of the elements corresponding to the (valid) 2D keypoints are known, the 2D-2D matches between the query image and the candidate reference image are lifted to 2D-3D matches between the query image and the explicit 3D representation.

In embodiments, the patch may be rendered as if a 2D image of the 3D scene was captured by a virtual camera pointing at the coordinates of the element with a configuration determined by the reference pose.

According to embodiments, the rendered patches of a candidate image have at least a partial overlap in field of view.

This allows for rendering only once each unique ray even when it is shared by a plurality of patches, thereby advantageously reducing the computation time. This is especially advantageous when combined with an online (on-the-fly) rendering of the patches which generally request additional computation time. Indeed, the additional computation time is significantly reduced with the present method wherein sparse patches of the candidate image are rendered instead of complete candidate images.

The present disclosure is further related to a data processing system comprising means for executing the steps of the above described method.

The present disclosure is further related to a computer program including instructions for executing the steps of the above described method when said program is executed by a computer. This program can use any programming language and take the form of source code, object code or a code intermediate between source code and object code, such as a partially compiled form, or any other desirable form.

The present disclosure is further related to a non-transitory recording medium readable by a computer and having recorded thereon a computer program including instructions for executing the steps of the above described method. The recording medium can be any entity or device capable of storing the program. For example, For example, the medium can include a mass memory device, such as hard drive. In general, mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; and magneto-optical disks.

Alternatively, the recording medium can be an integrated circuit in which the program is incorporated, the circuit being adapted to execute the method in question or to be used in its execution.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a flowchart representing steps of a method for relocalization tasks according to embodiments of the present disclosure;
FIG. 2 is a diagram illustrating aspects of a method for relocalization tasks according to embodiments of the present disclosure;
FIGS. 3-4 are tables illustrating advantages of embodiments of the method according to the present disclosure over other methods.

DETAILED DESCRIPTION OF EMBODIMENTS

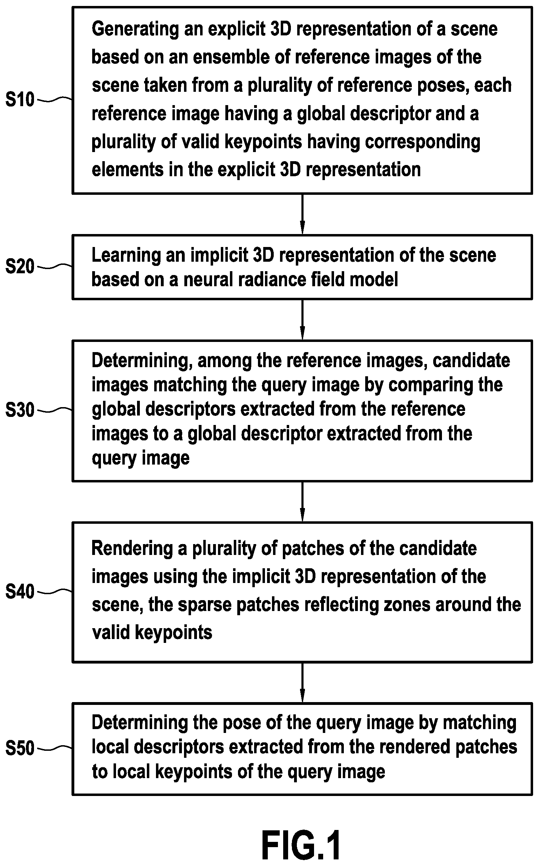

Methods for visual relocalization tasks, which constitute exemplary embodiments of the present disclosure, are now going to be presented in relation with FIGS. 1-4.

In reference to FIGS. 1-2, embodiments of the method for visual relocalization tasks comprises the following steps:

- S10 generating an explicit 3D representation of a scene based on an ensemble of reference images of the scene taken from a plurality of reference poses, each reference image having a global descriptor and a plurality of valid keypoints that have corresponding elements in the explicit 3D representation;
- S20 learning an implicit 3D representation of the scene based on a neural radiance field model;
- S30 determining, among the reference images, candidate images matching the query image by comparing the global descriptors of the reference images to a global descriptor extracted from the query image;
- S40 rendering a plurality of patches of the candidate images using the implicit 3D representation, the (sparse) patches reflecting zones around the elements of the explicit 3D representation corresponding to the valid keypoints; and
- S50 determining the pose of the query image by matching local descriptors extracted from the rendered patches to local keypoints of the query image.

More precisely, in step S10, an explicit (3D) representation 103 of a scene is generated. As an example, the scene may be representing an environment around a vehicle or around a robot. The explicit representation 103 may be a 3D point cloud, $X = \{X_1, ..., X_m\}$, obtained from reference images, $I = \{I_1, ..., I_n\}$, of the scene taken from different reference poses.

Each reference image is associated to a reference pose 106 and has several 2D keypoints,

$$P_i = \left\{ P_1^i, ..., P_m^i \right\}$$

, corresponding to 3D points in the 3D point cloud, $X$. The 2D keypoints are referred to as valid keypoints as they are selected in order to have corresponding elements in the 3D point cloud. In embodiments, a Structure from Motion (SfM) library such a "colmap" is used to reconstruct the 3D scene, see [REF 22].

In other terms, the explicit representation 103 generated at step S10 comprises sparse 3D points (which are elements of the 3D representation corresponding to valid 2D keypoints) and their corresponding 2D keypoints.

Each reference image, $I\_i$, also has a global descriptor, $v\_i$ that will be used for searching references images that are similar to a query image, 101. The global descriptor may be provided jointly with the reference image or obtained by processing the reference image with a model such as the NetVLAD, see [REF 23].

After, the generation of the explicit representation 103, the reference images and their local descriptors (i.e local descriptors of the 2D keypoints) are advantageously discarded in order to save substantial storage space. Only the global descriptors are preserved as well as the reference poses 106. Intrinsic parameters of the virtual cameras used to capture the reference images may also be preserved, such as focal length, optical center, or other parameters.

In step S20, an implicit representation 105 of the scene is learned. The implicit representation may be a trained Neural Radiance Field (NeRF)-based model compressing the scene in a single network implicitly. The Mip-NeRF base model may be used in particular, see [REF 8]. In embodiments, several sub-MipNeRF base models may be trained independently on sub-scenes of a scene.

The trained NeRF renders the RGB values of a single ray $r(t) = o + t \cdot d$ where $o$ and $d$ are the origin and direction of the ray, respectively, and t is the distance along the ray. The ray may be split into a set of intervals, $T_i = [t_i, t_{i+1}]$.

The features may be generated for $T_i$ with a $\gamma$ function. The features are fed into a Multilayer Perceptron (MLP) in order to predict density, $\tau$, and color, $c$, of the pixels of a patch of an image according to the following expressions.

$$\tau_i c_i = MLP[\gamma(r(T_i)), d, \theta], \mathbf{C}(\mathbf{r}, \mathbf{t}) = \sum_i w_i c_i \qquad \text{(Equation 1)}$$

$$w_i = (1 - \exp[-\tau_i(t_{i+1} - t_i)]) \cdot \exp\left[-\sum_{j<i} \tau_j(t_{j+1} - t_j)\right] \qquad \text{(Equation 2)}$$

In Equation 1, $\mathbf{C}(\mathbf{r}, \mathbf{t})$ is the predicted pixel value. For better performance, it may be optimized from coarse to fine according to the following expression.

$$\sum_{r \in R} 0.1 \cdot L_{rec}[\mathbf{C}(\mathbf{r}, \mathbf{t}^c), \mathbf{C}^*(\mathbf{r})] + L_{rec}[\mathbf{C}(\mathbf{r}, \mathbf{t}^f), \mathbf{C}^*(\mathbf{r})] \qquad \text{(Equation 3)}$$

In Equation 3, $R$ is the set of rays for training. $\mathbf{t}^c$ and $\mathbf{t}^f$ are the predicted coarse distance and the predicted fine distance. $\mathbf{C}^*(\mathbf{r})$ is the ground-truth color. $L_{rec}$ is the mean squared error.

As a single NeRF may not be able to represent a scene, in embodiments, the scene is advantageously divided into several pieces (sub-scenes). The scene may be divided uniformly. More advantageously, the scene may be divided by leveraging priors of reference images which reconstruct the scene. In particular, the scene may be divided by performing clustering on the poses of the references images. For example, it is possible to use K-means with a given number of clusters $N$, see [REF 24]. This strategy allows for segmenting the scene in more balanced pieces.

In embodiments, the scene is divided of a dataset are divided into several sub-scenes and separate NeRFs are trained independently to represent each of the sub-scenes.

In step S30, a query image 101 is matched to candidate images 107 that are selected among the reference images. Given a query image 101, $I_q$, we first extract global descriptors, $v_q$, and a set of 2D keypoints,

$$P_q = \{P_1^q, ..., P_k^q\}$$

.

As the explicit representation already contains global descriptors of all the reference images, it is performed a nearest matching to find top $k$ candidate images, $I^c = \{I_1^c, ..., I_k^c\}$, with the smallest distances between reference global descriptors and the global descriptor of the query image 101. The candidate reference images, $I^c$, are sorted in ascending order according to their distances to the global descriptor, $v_q$, of the query image.

In step S40, patches 120 of the candidate images 107 are rendered and used to perform matching between the query image 101 and the candidate images 107. In particular, at test time, the 2D observations of the candidate images 107 provide prior sparse pixel locations and poses as inputs to the trained NeRFs which can thereby be used for rendering.

The matchings between the query image 101 and all the candidate images 107 are performed independently. Since the explicit representation 103 does not comprise any local 2D descriptors (as they have been advantageously discarded in order to save storage space), patches 102 of a candidate image 107 are rendered with the implicit representation 105.

In particular, for a keypoint, $P_{ij}^c$, of a candidate image, $I_i^c$, a set of rays, $\lambda_r \times \lambda_r$, is generated at the center of the keypoint. The ensemble of rays, denoted as $\mathcal{R}_{ij}^c$, and the reference pose 106 of the candidate image 107, $I_i^c$, is fed to the NeRF model of the implicit representation 105 in order to predict RGB values. $\mathcal{R}_{ij}^c$ is then reshaped as a patch 102, $p_{ij}^c$, with size of $\lambda_r \times \lambda_r$. The patch 102, $p_{ij}^c$, is then used as the input of a local feature network in order to obtain the

descriptor, $d^c_{ij}$, and the score, $s^c_{ij}$ for 2D-2D matching.

The latter process may be described with the following expressions.

$$\mathcal{R}^c_{ij} = f_r\big(P^c_{ij}, \lambda_r\big), \boldsymbol{C}^c_{ij} = f_{nerf}(\mathcal{R}^c_{ij}, \theta) \qquad \text{(Equation 4)}$$

$$p^c_{ij} = f_p\big(\boldsymbol{C}^c_{ij}\big), (d^c_{ij}, s^c_{ij}) = f_l(p^c_{ij}) \qquad \text{(Equation 5)}$$

In Equations 4-5, $f_r$; $f_{nerf}$; $f_p$; and $f_l$, are functions corresponding to the ray generation; the NeRF with weights of $\theta$; the rendered patch; and the local feature extractions, respectively.

By contrast to methods of the prior art using image-wise rendering (rendering of the whole reference images), the present sparse rendering focuses only on useful keypoints with corresponding 3D points in the explicit 3D representation 103. Indeed, in general, due to occlusions, dynamic objects, or other phenomena, some 2D keypoints extracted from the reference images may not have 3D correspondences after Structure from Motion algorithms have been used.

Advantageously, in the present method, only the useful keypoints defined by their 2D coordinates are preserved, along with the global descriptor of each reference image. Alternatively, only the 3D coordinates of the elements corresponding to the keypoints may be preserved and the 2D coordinates may thereby be recomputed from the 3D coordinates.

Further, only a plurality of sparse patches centered around those useful 2D keypoints (or rather around the corresponding elements in the explicit 3D representation) are rendered in the candidate images instead of the whole images, thereby significantly reducing processing time.

For example, an image with size of $480 \times 640$ pixels from a reference dataset, such as the 7Scenes dataset (see [REF 10]), has 307,200 rays in total. However, for 500 keypoints with patch size of $15 \times 15$ pixels, the number of rays is 112,500, which amount to a reduction by a 2.7 factor.

In embodiments, rendered patches may have overlap so that, for each unique ray, it is rendered only once, which further makes the rendering efficient. This is particularly advantageous when the rendering is implemented online, as the online rendering of patches generally introduce an additional time cost for feature extraction, which is significantly reduced in the present method by virtue of the rendering a patches with limited size.

In step S50, the pose of the query image (estimated pose 104) is estimated by performing 2D-2D matching using the rendered patches. In particular, as the corresponding 3D point coordinates of each keypoint of the reference images is known, 2D-3D matches between the query image and the explicit 3D representation can be obtained from 2D-2D matches between query images and candidate image.

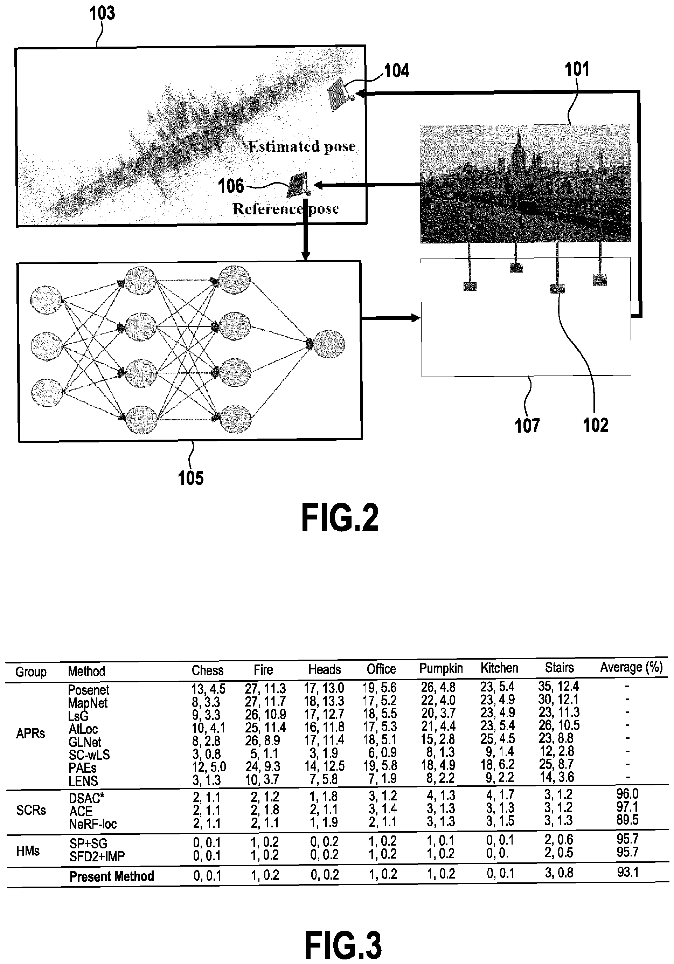

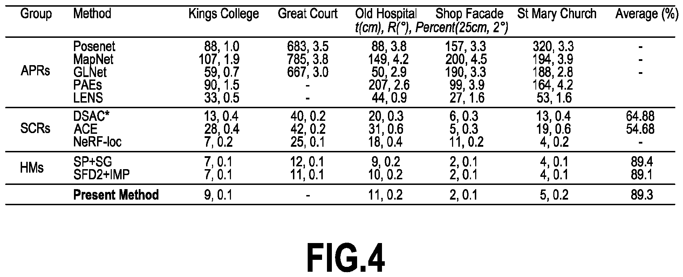

Results of embodiments of the present method when applied to visual relocalization tasks on known datasets and comparison with known methods are presented in reference to Figs.3-4. In particular, the results in Fig. 3 are obtained when applying methods to the 7Scene dataset (see [REF 10]) and results in Fig. 4 are obtained when applying methods to the CambridgeLandmarks dataset (see [REF 1]).

In order to obtain these results, the present method is implemented using PyTorch [REF 7].

Further, the MipNeRF model [REF 8] is used as a NeRF model for scene representation. Each model is trained with an Adam optimizer (see [REF 9]) using a batch size of 1024 on a single graphical processing unit (RTX 3090) for 50.000 iterations in total. The initial learning rate is set to 0.001 and is decayed at the ratio of 1e-8 after 5.000 iterations. The patch size, $\lambda_r$ is set to 15 in the experiments leading to some of the presented results.

Each sub-scene from the dataset is assigned to a NeRF model. Following disclosed procedures, NetVLAD is adopted to provide 20 candidate reference images for a query image in the 7Scene dataset, and 50 candidate reference image for a query image in the CambridgeLandmarks dataset.

With reference to Figs. 3-4, the present method is compared to three groups of methods of the prior art: the APR methods (APRs), SCR methods (SCRs), and HM methods (HMs).

The APR methods to which the present method is compared are: Posenet (see [REF 1]), MapNet (see [REF 11]), LsG (see [REF 12]), AtLoc (see [REF 13]), GLNet (see [REF 14]), SC-wLS (see [REF 15]), PAEs (see [REF 16]), and LENS (see [REF 6]).

The SCR methods to which the present method is compared are: DSAC* (see [REF 25]), ACE (see [REF 17]), and NeRF-loc (see [REF 5]).

The HM methods to which the present method is compared are: SP+SG (see [REF 18] & [REF 19]), and SFD2+IMP (see [REF 20] & [REF 21]).

Performances of the methods for visual relocalization tasks are evaluated with respect to the median translation (expressed in cm) and the median rotation (expressed in degrees). Further, in the last column, the average success ratio of poses within error of "5cm, 5°", respectively "25cm, 2°" (expressed in percentage) are indicated with respect to performance on the 7Scene dataset, respectively on the CambridgeLandmarks dataset.

In reference to Fig.3, it can be seen that the present method provides a substantial performance gain over APR methods and SCR methods and is approximately in par with the HM methods. Further, the present method outperforms methods of the prior art using Neural Radiance fields (LENS and NeRF-loc).

In reference to Fig. 4, it can be seen that the present method outperforms the APR methods and most of the SCR methods. In particular, the present method provides substantial performance gain over the methods using Neural Radiance fields across almost all image categories (except for the "Kings College" category and the "St Mary Church" category).

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

**Claims**

1. A computer-implemented method for visual relocalization task comprising:

    - (S10) generating an explicit 3D representation of a scene based on an ensemble of reference images of the scene taken from a plurality of reference poses, each reference image having a global descriptor and a plurality of valid keypoints that have corresponding elements in the explicit 3D representation;
    - (S20) learning an implicit 3D representation of the scene based on a neural radiance field model;
    - (S30) determining, among the reference images, candidate images matching the query image by comparing the global descriptors of the reference images to a global descriptor extracted from the query image;
    - (S40) rendering a plurality of patches of the candidate images using the implicit 3D representation of the scene, the patches reflecting zones around the elements of the explicit 3D representation corresponding to the valid keypoints; and
    - (S50) determining the pose of the query image by matching local descriptors extracted from the rendered patches to local keypoints of the query image.

2. The method of claim 1, wherein the reference images and keypoints other than the valid keypoints are discarded during the step of (S 10) generating an explicit 3D representation.

3. The method of claim 1 or 2, wherein the explicit 3D representation is one among: a 3D point cloud, a mesh, and a Gaussian splatting.

4. The method of claim 3, wherein the step of (S20) learning an implicit 3D representation of the scene based on a neural radiance field model comprises:

    - dividing the scene into several sub-scenes and learning an implicit 3D representation of each sub-scene with an auxiliary neural radiance field model, thereby resulting in a plurality of learned implicit 3D representations based on a plurality of auxiliary neural radiance field models.

5. The method of claim 4, wherein the scene is divided into several sub-scenes through clustering of the poses of the reference images.

6. The method of any of claims 1 to 5, wherein the query image comprises local descriptors and wherein the global descriptor of the query image is obtained by aggregating local descriptors into the global descriptor.

7. The method of any of claims 1 to 6, wherein the local descriptors of the rendered patches are extracted from the rendered patches by using local feature extraction models.

8. The method of any of claims 1 to 7, wherein the step of (S40) rendering a plurality of patches of the candidate images using the implicit 3D representation, the patches reflecting zones around the elements of the explicit 3D representation that correspond to the valid keypoints comprises, for each candidate image:

    - obtaining 3D coordinates of a valid keypoint in the 3D point cloud;

- generating a plurality of rays around the 3D coordinates of the valid keypoint; and
- rendering a patch of the candidate image using the implicit 3D representation based on the plurality of rays and on the reference pose.

9. The method of any of claims 1 to 8, wherein the rendered patches of a candidate image have at least a partial overlap in field of view.

10. A data processing system comprising means for executing the steps of the method according to any of claims 1 to 9.

11. A computer program including instructions for executing the steps of the method according to any of claims 1 to 9 when said program is executed by a computer.

12. A non-transitory recording medium readable by a computer and having recorded thereon a computer program including instructions for executing the steps of the method according to any of claims 1 to 9.

**Amended claims in accordance with Rule 137(2) EPC.**

1. A computer-implemented method for visual relocalization task comprising:

- (S10) generating an explicit 3D representation of a scene based on an ensemble of reference images of the scene taken from a plurality of reference poses, each reference image having a global descriptor and a plurality of valid keypoints that have corresponding elements in the explicit 3D representation, wherein the reference images and keypoints other than the valid keypoints are discarded;
- (S20) learning an implicit 3D representation of the scene based on a neural radiance field model;
- (S30) determining, among the reference images, candidate images matching the query image by comparing the global descriptors of the reference images to a global descriptor extracted from the query image;
- (S40) rendering a plurality of patches of the candidate images using the implicit 3D representation of the scene, the patches reflecting zones around the elements of the explicit 3D representation corresponding to the valid keypoints; and
- (S50) determining the pose of the query image by matching local descriptors extracted from the rendered patches to local keypoints of the query image.

2. The method of claim 1, wherein the explicit 3D representation is one among: a 3D point cloud, a mesh, and a Gaussian splatting.

3. The method of claim 2, wherein the step of (S20) learning an implicit 3D representation of the scene based on a neural radiance field model comprises:

- dividing the scene into several sub-scenes and learning an implicit 3D representation of each sub-scene with an auxiliary neural radiance field model, thereby resulting in a plurality of learned implicit 3D representations based on a plurality of auxiliary neural radiance field models.

4. The method of claim 3, wherein the scene is divided into several sub-scenes through clustering of the poses of the reference images.

5. The method of any of claims 1 to 4, wherein the query image comprises local descriptors and wherein the global descriptor of the query image is obtained by aggregating local descriptors into the global descriptor.

6. The method of any of claims 1 to 5, wherein the local descriptors of the rendered patches are extracted from the rendered patches by using local feature extraction models.

7. The method of any of claims 1 to 6, wherein the step of (S40) rendering a plurality of patches of the candidate images using the implicit 3D representation, the patches reflecting zones around the elements of the explicit 3D representation that correspond to the valid keypoints comprises, for each candidate image:

- obtaining 3D coordinates of a valid keypoint in the 3D point cloud;
- generating a plurality of rays around the 3D coordinates of the valid keypoint; and
- rendering a patch of the candidate image using the implicit 3D representation based on the plurality of rays and on the reference pose.

8. The method of any of claims 1 to 7, wherein the rendered patches of a candidate image have at least a partial overlap in field of view.

9. A data processing system comprising means for executing the steps of the method according to any of claims 1 to 8.

10. A computer program including instructions for executing the steps of the method according to any of claims 1 to 8 when said program is executed by a computer.

11. A non-transitory recording medium readable by a computer and having recorded thereon a computer program including instructions for executing the steps of the method according to any of claims 1 to 8.

S10 — Generating an explicit 3D representation of a scene based on an ensemble of reference images of the scene taken from a plurality of reference poses, each reference image having a global descriptor and a plurality of valid keypoints having corresponding elements in the explicit 3D representation

S20 — Learning an implicit 3D representation of the scene based on a neural radiance field model

S30 — Determining, among the reference images, candidate images matching the query image by comparing the global descriptors extracted from the reference images to a global descriptor extracted from the query image

S40 — Rendering a plurality of patches of the candidate images using the implicit 3D representation of the scene, the sparse patches reflecting zones around the valid keypoints

S50 — Determining the pose of the query image by matching local descriptors extracted from the rendered patches to local keypoints of the query image

# FIG.1

FIG.2

| Group | Method | Chess | Fire | Heads | Office | Pumpkin | Kitchen | Stairs | Average (%) |
|---|---|---|---|---|---|---|---|---|---|
| APRs | Posenet | 13, 4.5 | 27, 11.3 | 17, 13.0 | 19, 5.6 | 26, 4.8 | 23, 5.4 | 35, 12.4 | - |
| | MapNet | 8, 3.3 | 27, 11.7 | 18, 13.3 | 17, 5.2 | 22, 4.0 | 23, 4.9 | 30, 12.1 | - |
| | LsG | 9, 3.3 | 26, 10.9 | 17, 12.7 | 18, 5.5 | 20, 3.7 | 23, 4.9 | 23, 11.3 | - |
| | AtLoc | 10, 4.1 | 25, 11.4 | 16, 11.8 | 17, 5.3 | 21, 4.4 | 23, 5.4 | 26, 10.5 | - |
| | GLNet | 8, 2.8 | 26, 8.9 | 17, 11.4 | 18, 5.1 | 15, 2.8 | 25, 4.5 | 23, 8.8 | - |
| | SC-wLS | 3, 0.8 | 5, 1.1 | 3, 1.9 | 6, 0.9 | 8, 1.3 | 9, 1.4 | 12, 2.8 | - |
| | PAEs | 12, 5.0 | 24, 9.3 | 14, 12.5 | 19, 5.8 | 18, 4.9 | 18, 6.2 | 25, 8.7 | - |
| | LENS | 3, 1.3 | 10, 3.7 | 7, 5.8 | 7, 1.9 | 8, 2.2 | 9, 2.2 | 14, 3.6 | - |
| SCRs | DSAC* | 2, 1.1 | 2, 1.2 | 1, 1.8 | 3, 1.2 | 4, 1.3 | 4, 1.7 | 3, 1.2 | 96.0 |
| | ACE | 2, 1.1 | 2, 1.8 | 2, 1.1 | 3, 1.4 | 3, 1.3 | 3, 1.3 | 3, 1.2 | 97.1 |
| | NeRF-loc | 2, 1.1 | 2, 1.1 | 1, 1.9 | 2, 1.1 | 3, 1.3 | 3, 1.5 | 3, 1.3 | 89.5 |
| HMs | SP+SG | 0, 0.1 | 1, 0.2 | 0, 0.2 | 1, 0.2 | 1, 0.1 | 0, 0.1 | 2, 0.6 | 95.7 |
| | SFD2+IMP | 0, 0.1 | 1, 0.2 | 0, 0.2 | 1, 0.2 | 1, 0.2 | 0, 0. | 2, 0.5 | 95.7 |
| | **Present Method** | 0, 0.1 | 1, 0.2 | 0, 0.2 | 1, 0.2 | 1, 0.2 | 0, 0.1 | 3, 0.8 | 93.1 |

FIG.3

| Group | Method | Kings College | Great Court | Old Hospital | Shop Facade | St Mary Church | Average (%) |
|-------|--------|---------------|-------------|--------------|-------------|----------------|-------------|
| | | | | t(cm), R(°), Percent(25cm, 2°) | | | |
| APRs | Posenet | 88, 1.0 | 683, 3.5 | 88, 3.8 | 157, 3.3 | 320, 3.3 | - |
| | MapNet | 107, 1.9 | 785, 3.8 | 149, 4.2 | 200, 4.5 | 194, 3.9 | - |
| | GLNet | 59, 0.7 | 667, 3.0 | 50, 2.9 | 190, 3.3 | 188, 2.8 | - |
| | PAEs | 90, 1.5 | - | 207, 2.6 | 99, 3.9 | 164, 4.2 | |
| | LENS | 33, 0.5 | - | 44, 0.9 | 27, 1.6 | 53, 1.6 | |
| SCRs | DSAC* | 13, 0.4 | 40, 0.2 | 20, 0.3 | 6, 0.3 | 13, 0.4 | 64.88 |
| | ACE | 28, 0.4 | 42, 0.2 | 31, 0.6 | 5, 0.3 | 19, 0.6 | 54.68 |
| | NeRF-loc | 7, 0.2 | 25, 0.1 | 18, 0.4 | 11, 0.2 | 4, 0.2 | - |
| HMs | SP+SG | 7, 0.1 | 12, 0.1 | 9, 0.2 | 2, 0.1 | 4, 0.1 | 89.4 |
| | SFD2+IMP | 7, 0.1 | 11, 0.1 | 10, 0.2 | 2, 0.1 | 4, 0.1 | 89.1 |
| | **Present Method** | 9, 0.1 | - | 11, 0.2 | 2, 0.1 | 5, 0.2 | 89.3 |

# FIG.4

## EUROPEAN SEARCH REPORT

| | Application Number |
|---|---|
| | EP 24 16 9486 |

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HOU YUXIN ET AL: "Implicit Map Augmentation for Relocalization", 18 February 2023 (2023-02-18), ADVANCES IN VISUAL COMPUTING : 16TH INTERNATIONAL SYMPOSIUM, ISVC 2021, VIRTUAL EVENT, OCTOBER 4-6, 2021, PROCEEDINGS, PART II; [LECTURE NOTES IN COMPUTER SCIENCE], SPRINGER INTERNATIONAL PUBLISHING, CHAM, PAGE(S) 621 - 638, XP047651244, ISSN: 0302-9743 ISBN: 978-3-030-90436-4 [retrieved on 2023-02-18] * abstract * * sections 1, 3.3 * * figure 2 * | 1-12 | INV. G06T7/73 |
| A | Xue Fei: "VRS-NeRF: Visual Relocalization with Sparse Neural Radiance Field", GitHub - feixue94/vrs-nerf at c36116dc3413f7e0a04d84f4d8cbbb4ee3663c85, 29 September 2023 (2023-09-29), XP093201782, Retrieved from the Internet: URL:https://github.com/feixue94/vrs-nerf/tree/c36116dc3413f7e0a04d84f4d8cbbb4ee3663c85 * the whole document * | 1-12 | |
| A,D | FEI XUE ET AL: "SFD2: Semantic-guided Feature Detection and Description", ARXIV.ORG, CORNELL UNIVERSITY LIBRARY, 201 OLIN LIBRARY CORNELL UNIVERSITY ITHACA, NY 14853, 11 June 2023 (2023-06-11), XP091535291, * abstract * | 1-12 | TECHNICAL FIELDS SEARCHED (IPC) G06T |

-/--

The present search report has been drawn up for all claims

| Place of search | Date of completion of the search | Examiner |
|---|---|---|
| Munich | 9 September 2024 | Engels, Angela |

EPO FORM 1503 03.82 (P04C01)

Europäisches
Patentamt

European
Patent Office

Office européen
des brevets

**EUROPEAN SEARCH REPORT**

Application Number

EP 24 16 9486

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | FEI XUE ET AL: "IMP: Iterative Matching and Pose Estimation with Adaptive Pooling", ARXIV.ORG, CORNELL UNIVERSITY LIBRARY, 201 OLIN LIBRARY CORNELL UNIVERSITY ITHACA, NY 14853, 11 June 2023 (2023-06-11), XP091535257, * abstract * | 1-12 | |
| A | JONATHAN T BARRON ET AL: "Zip-NeRF: Anti-Aliased Grid-Based Neural Radiance Fields", ARXIV.ORG, CORNELL UNIVERSITY LIBRARY, 201 OLIN LIBRARY CORNELL UNIVERSITY ITHACA, NY 14853, 26 October 2023 (2023-10-26), XP091645758, * abstract * | 1-12 | |

----- 

-----

TECHNICAL FIELDS
SEARCHED         (IPC)

The present search report has been drawn up for all claims

| Place of search | Date of completion of the search | Examiner |
|---|---|---|
| Munich | 9 September 2024 | Engels, Angela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

....................................................................................

& : member of the same patent family, corresponding document

EPO FORM 1503 03.82 (P04C01)

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KENDALL, ALEX ; GRIMES, MATTHEW ; CIPOLLA, ROBERTO**. Posenet: A convolutional network for real-time 6-dof camera relocalization.. *Proceedings of the IEEE international conference on computer vision.*, 2015, 2938-2946
- **HOTTON, JAMIE ; GLOCKER, BEN ; ZACH, CHRISTOPHER et al.** Scene coordinate regression forests for camera relocalization in RGB-D images.. *Proceedings of the IEEE conference on computer vision and pattern recognition*, 2013, 2930-2937
- **SARLIN, PAUL-EDOUARD ; CADENA, CESAR ; SIEGWART, ROLAND et al.** From coarse to fine: Robust hierarchical localization at large scale.. *Proceedings of the IEEE/CVF Conference on Computer Vision and Pattern Recognition.*, 2019, 12716-12725
- **MILDENHALL, BEN ; SRINIVASAN, PRATUL P ; TANCIK, MATTHEW et al.** Nerf: Representing scenes as neural radiance fields for view synthesis.. *Communications of the ACM*, 2021, vol. 65 (1), 99-106
- **LIU, JIANLIN ; NIE, QIANG ; LIU, YONG et al.** NeRF-Loc: Visual Localization with Conditional Neural Radiance Field.. *arXiv preprint arXiv:2304.07979*, 2023
- **MOREAU, ARTHUR ; PIASCO, NATHAN ; TSISHKOU, DZMITRY et al.** LENS: Localization enhanced by NeRF synthesis.. *Annual Conference on Robot Learning.*, 2021